# EUROPEAN PATENT APPLICATION

(11) **EP 1 307 003 A2**
(43) Date of publication of application: **02.05.2003**
(21) Application number: 02024407.5
(22) Date of filing: 28.10.2002
(51) Int. Cl.: H04L 12/28

(54) **Parameter setting system**

(30) Priority: 29.10.2001 JP 2001330695; 05.09.2002 JP 2002259656
(71) Applicant: NEC Infrontia Corporation, Kawasaki-shi, Kanagawa (JP)
(72) Inventor: Hodoshima, Takeshi, Takatsu-ku, Kawasaki-shi, Kanagawa (JP)
(74) Representative: VOSSIUS & PARTNER

(57) **Abstract**

In a parameter setting system for setting a group of parameters required when a personal computer is connected by the use of a wireless LAN to an object network provided with an access point for the wireless LAN, the access point is assigned with a SSID (Service Set IDentification) code which is a unique code specific to the access point and which is one parameter of the group of parameters. The access point is for transmitting a beacon including the SSID code. The personal computer includes: a SSID extractor (14) for receiving via the wireless LAN the beacon transmitted from the access point and for extracting the SSID code from the beacon; a network connection information file (17) including the group of parameters required for connecting the personal computer to the object network; a registry (19); and a parameter detector (16). The parameter detector is for producing, when the SSID code supplied from the SSID extractor is coincident with the one parameter of the group of parameters in the network connection information file, the group of parameters in the network connection information file as detected parameters and for writing the detected parameters as setting parameters into the registry.

## Description

This invention relates to a parameter setting system for use in a personal computer to set parameters required when the personal computer is connected to an object network by the use of a wireless LAN (Local Area Network).

A wireless LAN (Local Area Network) is established between a personal computer and a predetermined network as an object network by providing the personal computer and the predetermined network with a wireless LAN adapter and an access point, respectively. By the use of the wireless LAN, the personal computer can easily be connected to the predetermined network.

When the personal computer is connected to the predetermined network by the use of the wireless LAN, it is necessary to set a number of parameters, such as TCP(Transmission Control Protocol)/IP(Internet Protocol) setting (setting of an IP address, a subnet mask, a gateway, WINS (Windows (Registered Trademark) Internet Naming Service), DNS (Domain Name System), and so on), wireless LAN setting (setting of a SSID (Service Set IDentification) code, encryption, and so on). In order to browse the Internet, it is necessary to set a number of parameters, for example, for proxy server setting in a browser.

These parameters are manually set by the use of a keyboard of the personal computer. This requires a long setting time and often causes an input error.

It is therefore an object of this invention to provide a parameter setting system capable of easily and accurately carrying out setting of parameters required when a personal computer is connected to an object network by the use of a wireless LAN.

It is another object of this invention to provide a parameter setting system capable of automatically setting the above-mentioned parameters.

Parameter setting systems according to this invention are as follows.
(1) A parameter setting system for setting a group of parameters required when a personal computer is connected by the use of a wireless LAN (Local Area Network) to an object network provided with an access point for the wireless LAN, wherein:
   the access point is assigned with a SSID (Service Set IDentification) code which is a unique code specific to the access point and which is one parameter of the group of parameters, the access point being for transmitting a beacon comprising the SSID code;
   the personal computer comprising:
      a SSID extractor for receiving via the wireless LAN the beacon transmitted from the access point and for extracting the SSID code from the beacon;
      a network connection information file comprising the group of parameters required for connecting the personal computer to the object network;
      a registry; and
      a parameter detector connected to the SSID extractor and the network connection information file for producing, when the SSID code supplied from the SSID extractor is coincident with the one parameter of the group of parameters in the network connection information file, the group of parameters in the network connection information file as detected parameters and for writing the detected parameters as setting parameters into the registry.
(2) A parameter setting system for setting a group of parameters required when a personal computer is connected by the use of a wireless LAN (Local Area Network) to an object network provided with an access point for the wireless LAN, wherein:
   the access point is assigned with a SSID (Service Set IDentification) code which is a unique code specific to the access point and which is one parameter of the group of parameters, the access point being for transmitting a beacon comprising the SSID code;
   the personal computer comprising:
      a SSID extractor for receiving via the wireless LAN the beacon transmitted from the access point and for extracting the SSID code from the beacon;
      a network connection information file comprising a predetermined part of the group of parameters required for connecting the personal computer to the object network, the predetermined part of the group of parameters comprising the SSID code as the one parameter of the group of parameters;
      a registry; and
      a parameter detector connected to the SSID extractor and the network connection information file for producing, when the SSID code supplied from the SSID extractor is coincident with the one parameter of the predetermined part of the group of parameters in the network connection information file, the predetermined part of the group of parameters in the network connection information file as detected parameters and for writing the detected parameters as setting parameters into the registry;
      the access point of the object network memorizing a remaining part of the group of parameters required for connecting the personal computer to the object network, the access point of the object network being responsive to a request from the personal computer for delivering the remaining part via the wireless LAN to the personal computer;
      the personal computer also writing the remaining part into the registry as the setting parameters.
(3) A parameter setting system for setting a group of parameters required when a personal computer is connected by the use of a wireless LAN (Local Area Network) to an object network provided with an access point for the wireless LAN, wherein:
   the access point is assigned with a SSID (Service Set IDentification) code which is a unique code specific to the access point and which is one parameter of the group of parameters, the access point being for transmitting a beacon comprising the SSID code;
   the personal computer comprising:
      a SSID extractor for receiving via the wireless LAN the beacon transmitted from the access point and for extracting the SSID code from the beacon;
      a network connection information file comprising a predetermined part of the group of parameters required for connecting the personal computer to the object network, the predetermined part of the group of parameters comprising the SSID code as the one parameter of the group of parameters;
      a registry; and
      a parameter detector connected to the SSID extractor and the network connection information file for producing, when the SSID code supplied from the SSID extractor is coincident with the one parameter of the predetermined part of the group of parameters in the network connection information file, the predetermined part of the group of parameters in the network connection information file as detected parameters and for writing the detected parameters as setting parameters into the registry;
      the object network having a server connected to the access point, the server of the object network memorizing a remaining part of the group of parameters required for connecting the personal computer to the object network, the access point of the object network being responsive to a request from the personal computer for delivering the remaining part via the access point and the wireless LAN to the personal computer;
      the personal computer also writing the remaining part into the registry as the setting parameters.
(4) A parameter setting system for setting a group of parameters required when a personal computer is connected by the use of a wireless LAN (Local Area Network) to an object network provided with an access point for the wireless LAN, wherein:
   the access point is for identifying the personal computer by the use of unique identification information which is included in a communication packet from the personal computer and which is specific to the personal computer;
   the access point memorizing the group of parameters, the access point delivering the group of parameters via the wireless LAN to the personal computer when the access point detects the unique identification information in the communication packet from the personal computer;
   the personal computer comprising:
      a registry; and
      a parameter detector for producing, when the parameter detector receives the group of parameters, the group of parameters as detected parameters and for writing the detected parameters as setting parameters into the registry.
(5) A parameter setting system for setting a group of parameters required when a personal computer is connected by the use of a wireless LAN (Local Area Network) to an object network provided with an access point for the wireless LAN, wherein:
   the object network has a server connected to the access point, the server of the object network memorizing the group of parameters;
   the access point being for identifying the personal computer by the use of unique identification information which is included in a communication packet from the personal computer and which is specific to the personal computer; the access point delivering the group of parameters from the server to the personal computer via the wireless LAN when the access point detects the unique identification information in the communication packet from the personal computer;
   the personal computer comprising:
      a registry; and
      a parameter detector for producing, when the parameter detector receives the group of parameters, the group of parameters as detected parameters and for writing the detected parameters as setting parameters into the registry.

### Brief Description of the Drawing:

Fig. 1 is a block diagram of a parameter setting circuit according to a first embodiment of this invention;
Fig. 2 is a block diagram of a system to which this invention is applicable;
Fig. 3 shows setting parameters for connecting a personal computer to one of networks in Fig. 2;
Fig. 4 shows parameter set values memorized in first through third network connection files of the parameter setting circuit in Fig. 1;
Fig. 5 is a block diagram of a parameter setting circuit according to a second embodiment of this invention; and
Fig. 6 is a block diagram of a parameter setting circuit according to a third embodiment of this invention.

### Description of the Preferred Embodiments:

Now, description will be made of preferred embodiments of this invention with reference to the drawing.

As will later be described in detail, a parameter setting circuit according to this invention is used in case where a personal computer, particularly, a notebook-type personal computer operated by a Windows (Registered Trademark) operation system, is connected by the use of a wireless LAN to an object network provided with an access point. The wireless LAN has a unique characteristic such that the personal computer is easily connected to a different network after the personal computer is moved to a different location. This invention utilizes the above-mentioned unique characteristic of the wireless LAN and is applicable to a system including a plurality of networks and the personal computer selectively connected to one of the networks. The networks have access points disposed at a plurality of locations different in network environment, respectively. According to this invention, wireless LAN setting, network connection setting, browser (Internet browsing tool) setting can automatically be carried out.

According to this invention, respective setting parameters (for TCP/IP setting, wireless LAN setting, and browser setting) are memorized as a network connection information file for each of the networks to be connected. At a location where the personal computer is to be connected to one of the networks, the personal computer receives a beacon transmitted from the access point via the wireless LAN and retrieves a SSID (Service Set IDentification) code from the beacon. In case where the SSID code thus retrieved is contained in the network connection information file memorized in the personal computer, the content of the network connection information file is written as set values in a registry of the personal computer. Thus, network connection information required for connecting the personal computer to the network is set.

The network connection information file storing as the network connection information the set values for the network to be connected may be present in the personal computer or in one of the access point and the server.

When the access point and the personal computer are connected by the wireless LAN, connection may be established by simple connection setting without setting the SSID. At the time instant when the personal computer is connected to the access point, the access point supplies the personal computer with the network connection information required for connection with the network. The personal computer writes the network connection information as set values into the registry of the personal computer to enable connection with the network.

Generally, in case where the personal computer is connected to a different network, it is necessary to set an IP address, a subnet mask, a gateway, WINS, DNS, and so on as TCP/IP setting, to set a SSID code, encryption, and so on as wireless LAN setting, and to set a proxy server as browser setting. For these settings, many parameters are used. Therefore, it takes a considerably long time for a user to carry out a setting operation.

According to this invention, the personal computer automatically retrieves the SSID code and automatically writes the parameters for connection with the network. Therefore, it is possible to reduce time and labor required for the user to set the parameters in the personal computer every time when the personal computer is moved to a different location.

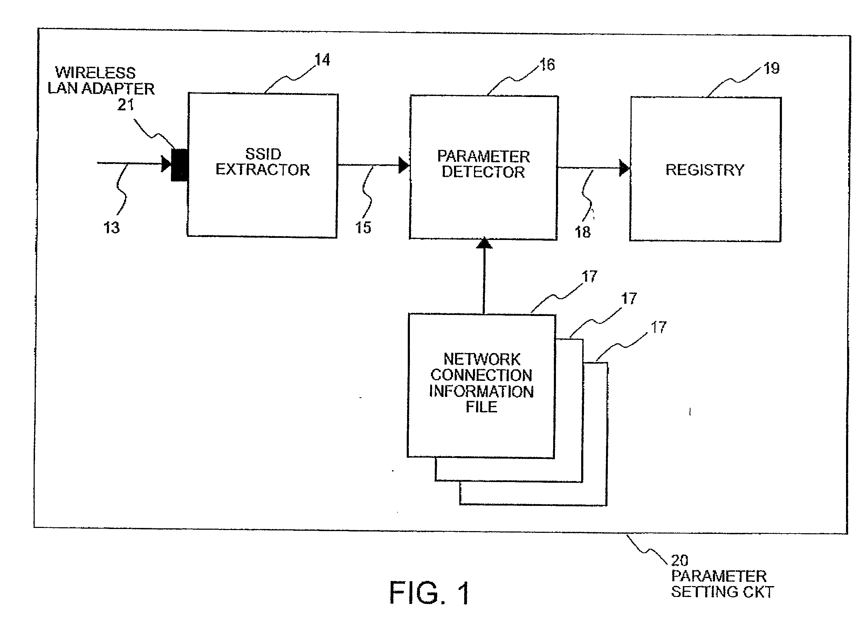

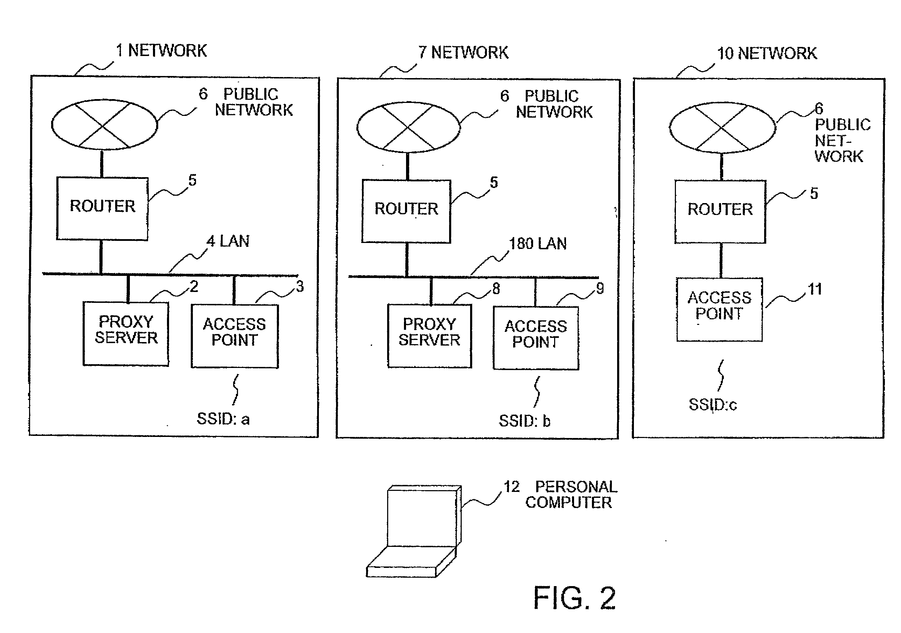

Referring to Fig. 1, a parameter setting circuit 20 according to a first embodiment of this invention is contained in a personal computer 12 illustrated in Fig. 2.

Referring to Fig. 2, the personal computer 12 is a notebook-type personal computer operated by a Windows (Registered Trademark) operation system and is selectively connected to one of first, second, and third networks 1, 7, and 10 by the use of a wireless LAN.

The first, the second, and the third networks 1, 7, and 10 are example of three networks adapted to be connected to the personal computer 12 by the use of the wireless LAN.

Each of the first and the second networks 1 and 7 is a network for an ordinary office. In the first network 1, a public network 6 is connected to a LAN 4 via a router 5. To the LAN 4, a proxy server 2 and an access point 3 are connected. In the second network 7, the public network 6 is connected to a LAN 180 via the router 5. To the LAN 180, a proxy server 8 and an access point 9 are connected. The LAN 4 and the LAN 280 are configured by IP addresses on different subnets completely different from each other. The proxy servers 2 and 8 are completely different in setting from each other. The access points 3 and 9 for the wireless LAN are completely different in setting from each other. On the other hand, the third network 10 is a network for home. in the third network 10, the public network 6 is connected to an access point 11 via the router 5. The third network 10 has a proxy server present in the Internet service provider outside the public network 6. The access points 3, 9, and 11 are assigned with service set identification (SSID) codes a, b, and c different from one another, respectively.

In case where setting is completely different among the locations where the first, the second, and the third networks 1, 7, and 10 are established and the personal computer 12 is selectively connected to one of the first through the third networks 1, 7, and 10, it is necessary for the personal computer 12 to switch or change network setting. According to this invention, the network setting can automatically be carried out.

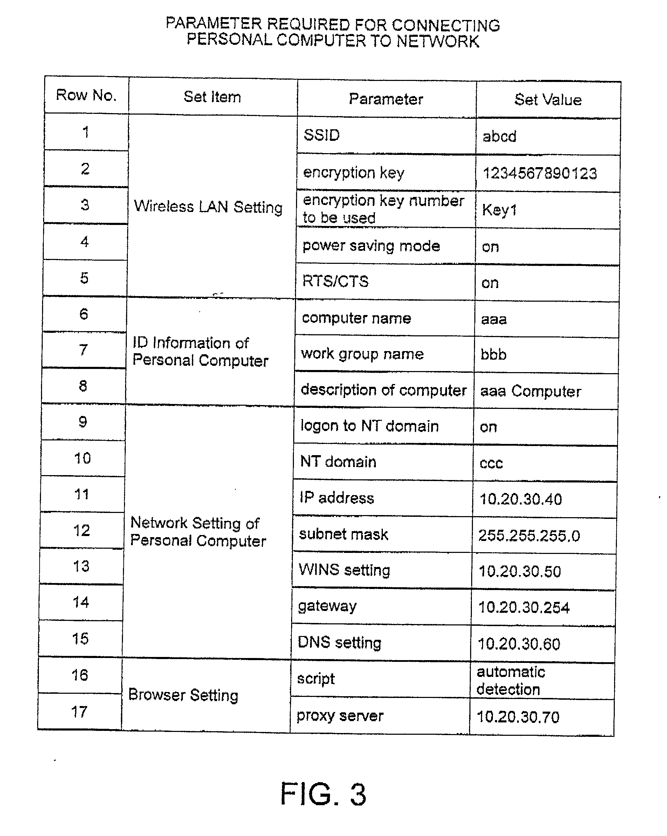

Referring to Fig. 3, setting parameters illustrated in the figure are used in order to connect the personal computer 12 to the first network 1 and to enable browsing of the Internet by a browser.

Turning back to Fig. 1, the parameter setting circuit 20 of the personal computer 12 (Fig. 2) has a SSID extractor 14 including a wireless LAN adapter 21. The SSID extractor 14 receives through the wireless LAN adapter 21 a beacon 13 transmitted from the access point 3, 9, or 10 for the wireless LAN and extracts from the beacon 13 an SSID code 15 as one of parameters required for connecting the personal computer 12 to the access point 3, 9, or 10. The personal computer 12 further has first through third network connection information files 17 required for connecting the personal computer 12 to the first through the third networks 1, 7, and-10 (Fig. 2). The personal computer 12 still further has a parameter detector 16 and a registry 19.

With reference to the SSID code 15 and the first through the third network connection information files 17, the parameter detector 16 retrieves, as detected parameters, those parameters required for connection to the network transmitting the beacon 13. The parameter detector 16 writes the detected parameters into the registry 19 as network setting parameters 18.

Next referring to Fig. 2 in addition, operation of the parameter setting circuit 20 illustrated in Fig. 1 will be described.

It is assumed that the personal computer 12 having the parameter setting circuit 20 enters a communication area of the access point 3 for the purpose of connection with the first network 1. In this event, the SSID extractor 14 of the parameter setting circuit 20 in the personal computer 12 at first receives the beacon 13 transmitted from the access point 3 and containing the SSID code having a value "a" required for wireless connection. The SSID extractor 14 extracts the SSID code "a". After the SSID code "a" is extracted, the parameter detector 16 receives the value "a" as the SSID code 15. The parameter detector 16 compares the value "a" of the SSID code and values in databases of the first through the third network connection information files 17. When the value of the SSID code is coincident with that contained in the database of one of the first through the third network connection information files 17, the parameter detector 16 acquires as network setting parameters 18 values of necessary parameters from the one of the network connection information files 17.

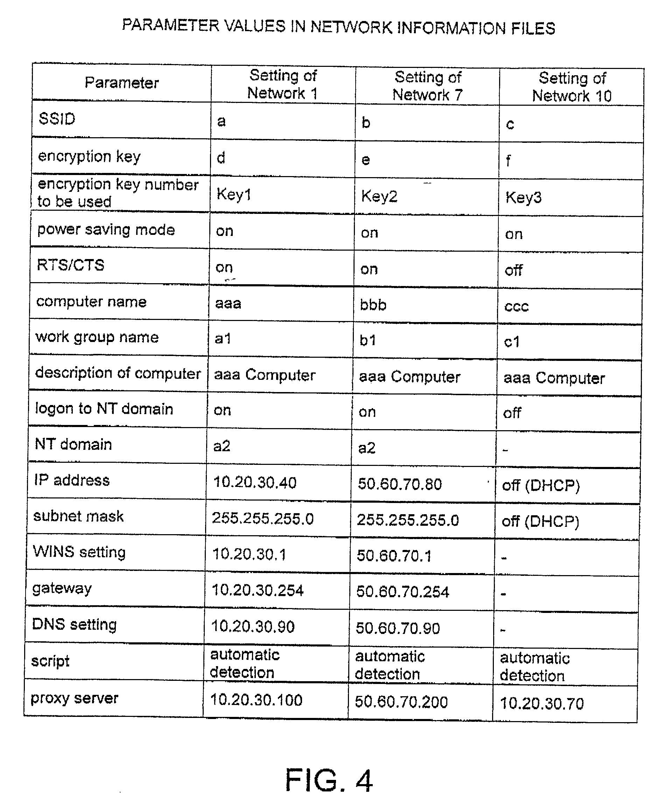

Referring to Fig. 4, the first through the third network connection information files 17 memorize parameter set values illustrated in the figure. When the SSID code extracted by the SSID extractor 14 has the value "a", this value "a" of the SSID code is contained in the column labeled "Setting of Network 1" in Fig. 4. Therefore, those values (from SSID to the proxy server) in the column "Setting of Network 1" in Fig. 4 are selected as the network setting parameters 18. in Fig. 4, the parameter RTS/CTS represents "Request to Send/Clear to Send".

Referring to Figs. 1 and 2, all of the values of the network setting parameters 18 are written by the parameter extractor 16 into corresponding items of the registry 19 as a file which stores set values for an application program executed on the personal computer 12. Since those values are not reflected on the application program only by writing the values into the registry 19, the personal computer 12 must be restarted. Accordingly, after the values are written into the registry 19, the personal computer 12 is restarted. After the personal computer 12 is restarted, the personal computer 12 can be connected to the access point 3 and the network 1 as well as to the Internet by the use of the proxy server 2.

According to the foregoing embodiment, it is possible to reduce time and labor required to set many parameters at each location if a user of the personal computer is permitted to connect a network and supplied from a network administrator with parameter values required for connection and the parameter values for all available networks are preliminarily registered in the personal computer.

If the values are entered by manual operation, an input error may possibly occur. In this invention, all value are correctly set because they are automatically supplied.

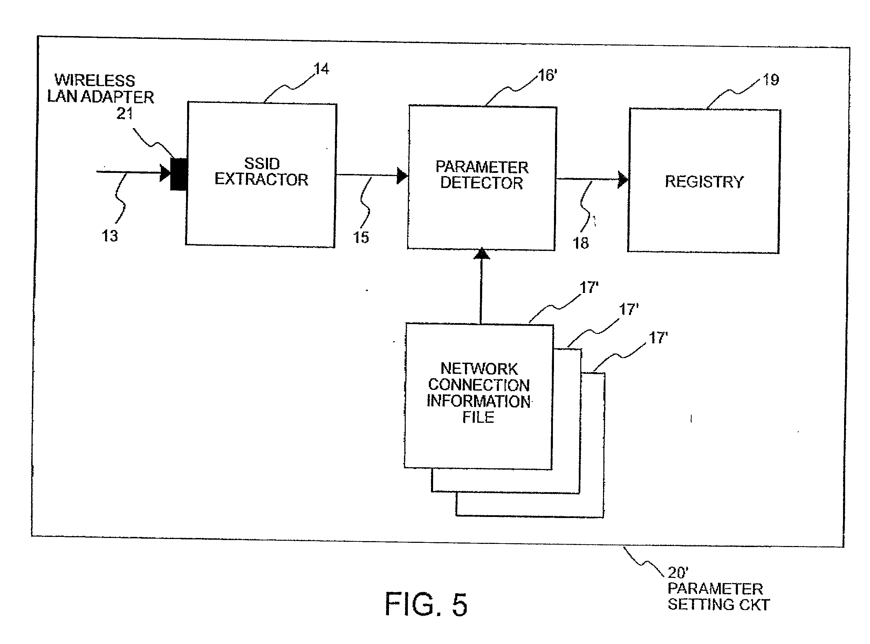

Referring to Fig. 5, a parameter setting circuit 20' according to a second embodiment of this invention is contained in the personal computer 12 illustrated in Fig. 2. The parameter setting circuit 20' has first through third network connection information files 17' each of which corresponds to a first part (which is referred to as a predetermined part) of each of the first through the third network connection information files 17' of the parameter setting circuit 20 in Fig. 1 except a second part (which is referred to as a remaining part). The second part which is not contained in each of the network connection information files 17' is memorized in the access point 3, 9, or 11 or the proxy server 2 or 8 in Fig. 2. The second part is delivered therefrom to the personal computer 12.

In order to memorize the second part in the access point 3, 9, or 11 or the proxy server 2 or 8 in Fig. 2, the access points 3, 9, or 11 or the proxy server 2 or 8 must have a DHCP (Dynamic Host Configuration Protocol) function. In the parameter setting circuit 20' in Fig. 5, each of the first through the third network connection information files 17' memorizes, as the first part, the setting of the wireless LAN in the first through the fifth rows in Fig. 3. More specifically, the first through the third network connection information files 17' of the parameter setting circuit 20' in Fig. 5 memorize the parameter values in the first through the fifth rows in Fig. 4 as the setting of the first through the third networks 1, 7, and 10, respectively.

Next referring to Figs. 2 and 4 in addition, operation of the parameter setting circuit 20' in Fig. 5 will be described.

It is assumed that the personal computer 12 having the parameter setting circuit 20' enters the communication area of the access point 3 for the purpose of connection with the first network 1. In this event, the SSID extractor 14 of the parameter setting circuit 20' in the personal computer 12 at first receives the beacon 13 transmitted from the access point 3 and containing the SSID code having a value "a" required for wireless connection. The SSID extractor 14 extracts the SSID code "a". After the SSID code "a" is extracted, the parameter detector 16' receives the value "a" as the SSID code 15. The parameter detector 16' compares the value "a" of the SSID code and values in databases of the first through the third network connection information files 17'. When the value of the SSID code is coincident with that contained in the database of one of the first through the third network connection information files 17', the parameter detector 16' acquires from the one of the network connection information files 17' the values of the wireless LAN setting in the first through the fifth rows in Fig. 3 (i.e., the parameter values in the first through the fifth rows in the column "Setting of Network 1" in Fig. 4) and writes the values as the network setting parameters 18 into the registry 19.

After completion of wireless connection between the access point 3 and the personal computer 12, the parameter setting circuit 20' of the personal computer 12 requests the access point 3 or the proxy server 2 having the DHCP function to send network set values of the personal computer 12 in the eleventh through the fifteenth rows in Fig. 3 (i.e., the parameter values in the eleventh through the fifteenth rows in the column "Setting of Network 1" in Fig. 4) and acquires these values. Next, the parameter setting circuit 20' of the personal computer 12 requests the access point 3 or the proxy server 2 having the personal computer identification information in the sixth through the eighth rows in Fig. 3, network setting of the personal computer 12 in the ninth and the tenth rows in Fig. 3, and browser set values in the sixteenth and the seventeenth rows in Fig. 3 to send the network connection information. In response to the request, the access point 3 or the proxy server 2 identifies the personal computer 12 to be permitted for connection with the network 1 with reference to a MAC (Media Access Control) address (i.e., unique identification information) of the personal computer 12. Thereafter, the access point 3 or the proxy server 2 sends the network connection information to the personal computer 12. The parameter setting circuit 20' of the personal compute 12 acquires the values of the network connection information. The parameter setting circuit 20' (typically, the parameter detector 16' of the parameter setting circuit 20') of the personal computer 12 writes the values of the network connection information into the registry 19. In the manner similar to that mentioned above, the personal computer 12 is restarted. Thereafter, the personal computer 12 can be connected to the network and to the Internet by the use of the proxy server.

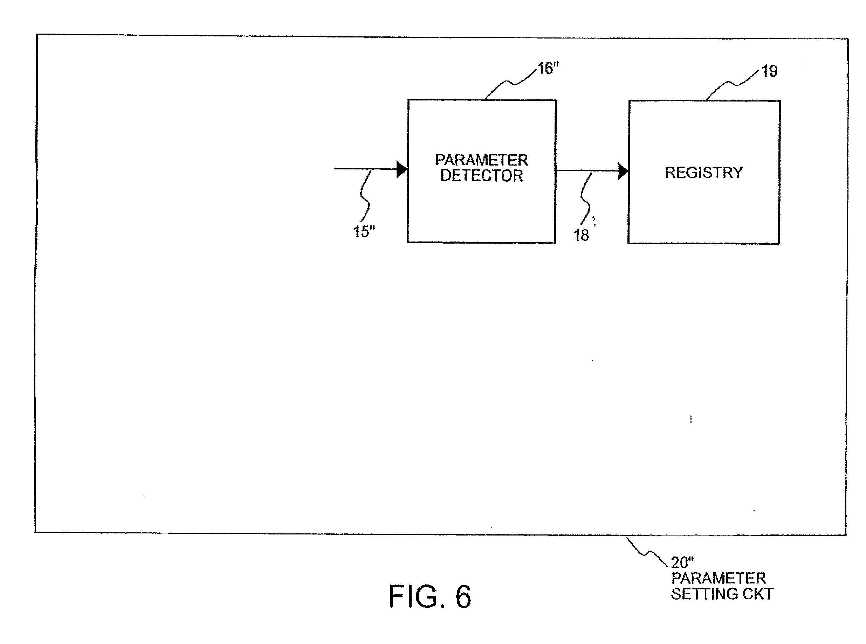

Referring to Fig. 6, a parameter setting circuit 20" according to a third embodiment of this invention is contained in the personal computer 12 illustrated in Fig. 2. The parameter setting circuit 20" does not contain the first through the third network connection information files 17 of the parameter setting circuit 20 in Fig. 1. The first through the third network connection information files 17 are memorized in the access point 3 (or the proxy server 2), the access point 9 (or the proxy server 8), and the access point 11 in Fig. 2, respectively. The network connection information is delivered therefrom to the personal computer 12.

Description will be made about the case where the access point 3 has the values of the first network connection information file. In this case, the parameter setting circuit 20" in Fig. 6 does not have the SSID extractor 14 in Fig. 1 or 5. A parameter detector 16" is arranged in the personal computer 12 but is merely operable to write into the registry 19 values 15" delivered from the access point 3. The first network connection information file is formed in the access point 3. In this case, the wireless LAN setting for the personal computer 12 is limited to simple connection setting in which connection is possible without setting the SSID code identical with that in the access point 3 and the access point 3 must accept the simple connection setting.

The access point 3 identifies the personal computer 12 to be permitted for connection with reference to the MAC address (i.e., the unique identification information). In the access point 3, the network connection information of the personal computer 12 to be permitted for connection is memorized as the network connection information file in relation to the MAC address.

When the personal computer 12 in Fig. 2 enters into the communication area of the access point 3, the access point 3 permits connection of a wireless channel by the simple connection setting. Thereafter, the access point 3 extracts the MAC address from the communication packet from the personal computer 12 and retrieves the network connection information file in the access point 3 by the use of the MAC address. If the MAC address in question is present in the network connection information file, the access point 3 acquires from the network connection information file the parameter values required for connecting the personal computer 12 to the network and sends the parameter values to the personal computer 12. When the personal computer 12 receives the parameter values, the parameter detector 16" writes the parameter values into the registry 19. In the manner similar to that mentioned above, the personal computer 12 is restarted. Thereafter, the personal computer 12 can be connected to the network 1 and to the Internet by the use of the proxy server 2.

As described above, according to this invention, it is possible to automatically, simply, and accurately set the parameters required when the personal computer is connected to the object network by the use of the wireless LAN.

## Claims

1. A parameter setting system for setting a group of parameters required when a personal computer (12) is connected by the use of a wireless LAN (Local Area Network) to an object network (1, 7, or 10) provided with an access point (3, 9, or 11) for said wireless LAN, wherein:
said access point is assigned with a SSID (Service Set IDentification) code which is a unique code specific to said access point and which is one parameter of said group of parameters, said access point being for transmitting a beacon comprising said SSID code;
said personal computer comprising:
a SSID extractor (14) for receiving via said wireless LAN said beacon transmitted from said access point and for extracting said SSID code from said beacon;
a network connection information file (17) comprising said group of parameters required for connecting said personal computer to said object network;
a registry (19); and
a parameter detector (16) connected to said SSID extractor and said network connection information file for producing, when said SSID code supplied from said SSID extractor is coincident with the one parameter of said group of parameters in said network connection information file, said group of parameters in said network connection information file as detected parameters and for writing said detected parameters as setting parameters into said registry.

2. A parameter setting system for setting a group of parameters required when a personal computer (12) is connected by the use of a wireless LAN (Local Area Network) to an object network (1, 7, or 10) provided with an access point (3, 9, or 11) for said wireless LAN, wherein:
said access point is assigned with a SSID (Service Set IDentification) code which is a unique code specific to said access point and which is one parameter of said group of parameters, said access point being for transmitting a beacon comprising said SSID code;
said personal computer comprising:
a SSID extractor (14) for receiving via said wireless LAN said beacon transmitted from said access point and for extracting said SSID code from said beacon;
a network connection information file (17') comprising a predetermined part of said group of parameters required for connecting said personal computer to said object network, said predetermined part of said group of parameters comprising said SSID code as the one parameter of said group of parameters;
a registry (19); and
a parameter detector (16') connected to said SSID extractor and said network connection information file for producing, when said SSID code supplied from said SSID extractor is coincident with the one parameter of said predetermined part of said group of parameters in said network connection information file, said predetermined part of said group of parameters in said network connection information file as detected parameters and for writing said detected parameters as setting parameters into said registry;
the access point of said object network memorizing a remaining part of said group of parameters required for connecting said personal computer to said object network, said access point of said object network being responsive to a request from said personal computer for delivering said remaining part via said wireless LAN to said personal computer;
said personal computer also writing said remaining part into said registry as the setting parameters.

3. A parameter setting system for setting a group of parameters required when a personal computer (12) is connected by the use of a wireless LAN (Local Area Network) to an object network (1 or 7) provided with an access point (3 or 9) for said wireless LAN, wherein:
said access point is assigned with a SSID (Service Set IDentification) code which is a unique code specific to said access point and which is one parameter of said group of parameters, said access point being for transmitting a beacon comprising said SSID code;
said personal computer comprising:
a SSID extractor (14) for receiving via said wireless LAN said beacon transmitted from said access point and for extracting said SSID code from said beacon;
a network connection information file (17') comprising a predetermined part of said group of parameters required for connecting said personal computer to said object network, said predetermined part of said group of parameters comprising said SSID code as the one parameter of said group of parameters;
a registry (19); and
a parameter detector (16') connected to said SSID extractor and said network connection information file for producing, when said SSID code supplied from said SSID extractor is coincident with the one parameter of said predetermined part of said group of parameters in said network connection information file, said predetermined part of said group of parameters in said network connection information file as detected parameters and for writing said detected parameters as setting parameters into said registry;
said object network having a server (2 or 8) connected to said access point, said server of said object network memorizing a remaining part of said group of parameters required for connecting said personal computer to said object network, said access point of said object network being responsive to a request from said personal computer for delivering said remaining part via said access point and said wireless LAN to said personal computer;
said personal computer also writing said remaining part into said registry as the setting parameters.

4. A parameter setting system for setting a group of parameters required when a personal computer (12) is connected by the use of a wireless LAN (Local Area Network) to an object network (1, 7, or 10) provided with an access point (3, 9, or 11) for said wireless LAN, wherein:
said access point is for identifying said personal computer by the use of unique identification information which is included in a communication packet from said personal computer and which is specific to said personal computer;
said access point memorizing said group of parameters, said access point delivering said group of parameters via said wireless LAN to said personal computer when said access point detects said unique identification information in said communication packet from said personal computer;
said personal computer comprising:
a registry (19); and
a parameter detector (16") for producing, when said parameter detector receives said group of parameters, said group of parameters as detected parameters and for writing said detected parameters as setting parameters into said registry,

5. A parameter setting system for setting a group of parameters required when a personal computer (12) is connected by the use of a wireless LAN (Local Area Network) to an object network (1 or 7) provided with an access point (3 or 9) for said wireless LAN, wherein:
said object network has a server (2 or 8) connected to said access point, said server of said object network memorizing said group of parameters;
said access point being for identifying said personal computer by the use of unique identification information which is included in a communication packet from said personal computer and which is specific to said personal computer; said access point delivering said group of parameters from said server to said personal computer via said wireless LAN when said access point detects said unique identification information in said communication packet from said personal computer;
said personal computer comprising:
a registry (19); and
a parameter detector (16") for producing, when said parameter detector receives said group of parameters, said group of parameters as detected parameters and for writing said detected parameters as setting parameters into said registry.
